# EUROPÄISCHE PATENTSCHRIFT

(11) **EP 3 195 965 B1**
(45) Veröffentlichungstag und Bekanntmachung des Hinweises auf die Patenterteilung: **11.07.2018**
(21) Anmeldenummer: 16152609.0
(22) Anmeldetag: 25.01.2016
(51) Int. Cl.: B23B 33/00

(54) **MITNEHMEREINRICHTUNG**
DRIVER DEVICE
DISPOSITIF D'ENTRAINEMENT

(43) Veröffentlichungstag der Anmeldung: 26.07.2017
(73) Patentinhaber: Neidlein-Spannzeuge GmbH, 72411 Bodelshausen (DE)
(72) Erfinder: Bombach, Jürgen, 72379 Hechingen (DE); Farger, Dirk, 72108 Rottenburg am Neckar (DE); Eberhardt, Ralf, 72411 Bodelshausen (DE)
(74) Vertreter: DREISS Patentanwälte PartG mbB

(56) Entgegenhaltungen:
- EP-A1- 2 444 183
- DE-A1- 2 203 164
- DE-B- 1 234 484
- DE-C- 900 166
- JP-A- S5 783 307
- JP-A- S60 123 205

## Beschreibung

Die Erfindung betrifft eine Mitnehmereinrichtung zur Drehmitnahme und Fixierung eines zwischen zwei Spitzen aufgenommenen Werkstücks, umfassend ein Mitnehmergehäuse, welches zum Antrieb um eine Drehachse mit einer Antriebseinrichtung verbindbar ist, ferner umfassend eine Mehrzahl von Mitnehmerelementen, welche jeweils in einer Mitnehmerelementführung verschiebbar gelagert und mit einem freien Mitnehmerende mit einer Stirnseite eines Werkstücks oder mit einem in die Stirnseite eingreifenden Zwischenelement in Eingriff bringbar sind. Ein Beispiel einer solchen Mitnehmereinrichtung gemäß dem Oberbegriff des Anspruchs 1 zeigt die JPS60123205A. Solche Mitnehmereinrichtungen werden auch als "Stirnseitenmitnehmer" oder "Stirnmitnehmer" bezeichnet und sind ebenfalls aus der DE 195 34 073 A1 und aus der DE 1 128 255 B bekannt. Diese Mitnehmereinrichtungen werden verwendet, um die Außenfläche von Werkstücken in derselben Aufspannung in ihrer gesamten Länge bearbeiten zu können; anders als beispielsweise bei Backenfuttern, welche ein Werkstück von radial außen umgreifen, sodass in diesem Bereich das Werkstück nicht in derselben Aufspannung bearbeitet werden kann.

Bei der aus der DE 195 34 073 A1 bekannten Mitnehmereinrichtung sind die einzelnen Mitnehmerelemente voneinander unabhängig in dem Mitnehmergehäuse längsverschieblich gelagert, sodass eine möglichst große Anzahl der vorhandenen Mitnehmerelemente in Eingriff mit der Stirnseite eines in Drehrichtung anzutreibenden Werkstücks gebracht werden kann, und zwar unabhängig von einer möglicherweise unebenen Geometrie der Stirnseite.

Bei der aus der DE 1 128 255 B bekannten Mitnehmereinrichtung sind die einzelnen Mitnehmerelemente ebenfalls voneinander unabhängig in dem Mitnehmergehäuse längsverschieblich gelagert, wirken jedoch mit einem scheibenförmigen Zwischenelement zusammen, das seinerseits in Eingriff mit der Stirnseite eines in Drehrichtung anzutreibenden Werkstücks gebracht werden kann.

Es hat sich herausgestellt, dass es insbesondere bei einer Bearbeitung von Werkstücken, bei welcher die Drehbewegung des Werkstücks einerseits und eine Raumlage eines Werkzeugs andererseits miteinander koordiniert werden müssen, eine besonders genaue, in Drehrichtung möglichst spielfreie Drehmitnahme erforderlich ist. Dies ist beispielsweise bei einer Zahnradschleif- oder Zahnradwälzfräsbearbeitung, oder auch bei der sonstigen Bearbeitungsvorgängen zur Herstellung von Nuten, Gewinden oder Konturen der Fall. Es gibt auch Anwendungsfälle, bei denen das zwischen den Spitzen aufgenommene Werkstück in Drehrichtung stillsteht und möglichst spielfrei gehalten werden soll, damit von einer Drehbearbeitung abweichende Bearbeitungen durchgeführt werden können, beispielsweise Fräsbearbeitungen.

Daher wurde in der Vergangenheit versucht, die Mitnehmerelemente und mit diesen zusammenwirkende, in dem Mitnehmergehäuse vorgesehene Mitnehmerelementführungen so exakt wie möglich auszuführen, sodass die Mitnehmerelemente praktisch spielfrei in den Mitnehmerelementführungen geführt sind. Diese Maßnahme ist jedoch mit einem extrem hohen Fertigungsaufwand verbunden. Zudem konnten trotz dieses Aufwands hohe Anforderungen an die Genauigkeit der Drehmitnahme bzw. der spielfreien Fixierung im Stillstand nur bedingt erfüllt werden.

Hiervon ausgehend liegt der vorliegenden Erfindung die Aufgabe zugrunde, eine Mitnehmereinrichtung der eingangs genannten Art so zu verbessern, dass sie eine nahezu spielfreie Drehmitnahme und Fixierung eines Werkstücks ermöglicht.

Diese Aufgabe wird bei einer Mitnehmereinrichtung der eingangs genannten Art dadurch gelöst, dass die Mitnehmerelemente zwei voneinander separate Mitnehmerelementabschnitte aufweisen, welche entlang einer Führungsachse innerhalb der Mitnehmerelementführung geführt sind und welche einander zugewandte Kontaktflächen aufweisen, die relativ zu der Führungsachse geneigt sind.

Erfindungsgemäß sind die Mitnehmerelemente nicht einstückig, sondern in zwei voneinander separate Mitnehmerelementabschnitte unterteilt. Diese Abschnitte wirken über Kontaktflächen zusammen, die relativ zu einer Führungsachse geneigt sind. Die Abschnitte wirken also über sich in geneigten Ebenen erstreckende Kontaktflächen zusammen.

Bei den Kontaktflächen handelt es sich um einander zugewandte Stirnflächen der Mitnehmerelementabschnitte. Durch die Neigung der Kontaktflächen bewirkt eine Druckbeaufschlagung in axialer Richtung, also ein Zusammenpressen der Mitnehmerelementabschnitte, dass diese entlang der Kontaktflächen aufeinander abgleiten, und zwar in zueinander entgegengesetzten Richtungen. Hierbei wird ein erster Mitnehmerelementabschnitt in einer ersten radialen Richtung gegen die Wandung der Mitnehmerelementführung gedrückt; der zweite Mitnehmerelementabschnitt wird in hierzu entgegengesetzter Richtung gegen einen gegenüberliegenden Abschnitt der Mitnehmerelementführung gedrückt. Auf diese Weise wird das Mitnehmerelement innerhalb der Mitnehmerelementführung verpresst, sodass das Mitnehmerelement spielfrei in der Mitnehmerelementführung gehalten ist.

Bei den Mitnehmerelementen handelt es sich insbesondere um im Wesentlichen zylindrische Bauteile, welche in ihrem Kontaktbereich die genannten Kontaktflächen aufweisen und welche auf voneinander abgewandten Seiten mit einer Druckkraft beaufschlagt werden können. Ein erster, dem Werkstück zugewandter Mitnehmerelementabschnitt ist an seinem freien Ende dadurch in axialer Richtung mit Druckkraft beaufschlagbar, dass das freie Ende entweder direkt mit dem zu bearbeitenden Werkstück in Eingriff steht oder mit einem Zwischenelement zusammenwirkt, das Bestandteil der Mitnehmereinrichtung ist. Dieses Zwischenelement wird seinerseits mittels des Werkstücks mit einer Druckkraft beaufschlagt und überträgt diese Druckkraft auf den ersten Mitnehmerelementabschnitt. In beiden Fällen, also unabhängig von der Verwendung eines Zwischenelements, wird die in den ersten Mitnehmerelementabschnitt eingeleitete Druckkraft von dem ersten Mitnehmerelementabschnitt über die Kontaktflächen auf einen zweiten, rückwärtigen Mitnehmerelementabschnitt übertragen. Der zweite Mitnehmerelementabschnitt stützt sich an seinem dem ersten Mitnehmerelementabschnitt abgewandten Ende an einem Abstützelement der Mitnehmereinrichtung ab.

Für den Fall, dass ein Zwischenelement verwendet wird, wirkt der genannte erste Mitnehmerelementabschnitt mit einer freien Stirnfläche mit einer hierzu korrespondierenden Gegenfläche des Zwischenelements zusammen. Die Paarung aus Stirnfläche und Gegenfläche kann beispielsweise aus einem Kugelabschnitt und einem Kegeltrichterabschnitt bestehen.

Vorzugsweise ist der Kugelabschnitt an der Stirnfläche des ersten Mitnehmerelementabschnitts ausgebildet, während die Gegenfläche an einer dem zu bearbeitenden Werkstück abgewandten Rückseite des Zwischenelements ausgebildet ist.

Bei einer bevorzugten Ausführungsform ist vorgesehen, dass die Kontaktflächen der Mitnehmerelementabschnitte glattflächig sind. Vorzugsweise betragen die Rautiefen Rz der Kontaktflächen maximal 30 µm. Um ein Abgleiten der Kontaktflächen zu unterstützen, kann ein Schmiermittel, insbesondere Schmierfett, vorgesehen sein.

Ein besonders gutes Abgleiten der aneinander anliegenden Kontaktflächen wird auch dadurch erreicht, dass sich die Kontaktflächen in geraden Ebenen erstrecken. Hierdurch vereinfacht sich auch die Fertigung der einander zugewandten Stirnflächen der Mitnehmerelementabschnitte.

Bevorzugt ist es ferner, wenn die Kontaktflächen bezogen auf die Führungsachse einen Neigungswinkel von 10° bis 80° aufweisen, vorzugsweise von 20° bis 70°, insbesondere von 30° bis 60°.

In vorteilhafter Weise sind die Mitnehmerelementabschnitte mit Spiel behaftet in der Mitnehmerelementführung geführt. Im Prinzip ist es möglich, dass das Spiel einen Betrag im Bereich von 1 µm bis ca. 300 µm hat. Bevorzugt ist es jedoch, dass das Radialspiel mindestens 5 pm, vorzugsweise mindestens 10 pm, insbesondere mindestens 20 pm, 40 µm oder 60 µm beträgt. Je größer das Radialspiel ist, desto kostengünstiger kann die Paarung zwischen den Mitnehmerelementabschnitten und der Mitnehmerelementführung hergestellt werden. Ferner ist es bevorzugt, dass das Radialspiel maximal 100 µm beträgt.

Bei einer besonders bevorzugten Ausführungsform ist vorgesehen, dass die Mitnehmerelementabschnitte mittels einer Verbindungseinrichtung miteinander verbunden sind. Auf diese Weise kann eine Baugruppe, gebildet aus zwei Mitnehmerelementabschnitten und Verbindungseinrichtung, gebildet werden, welche als ganze handhabbar ist, insbesondere montierbar und demontierbar. Somit vereinfacht sich die Montage und Demontage der Mitnehmereinrichtung, beispielsweise zu Wartungszwecken.

Bei einer bevorzugten Verbindungseinrichtung ist vorgesehen, dass diese einen ersten Verbindungsabschnitt zur festen Verbindung mit einem ersten Mitnehmerelementabschnitt aufweist, dass die Verbindungseinrichtung ferner einen zweiten Verbindungsabschnitt zur festen Verbindung mit einem zweiten Mitnehmerelementabschnitt aufweist und dass die Verbindungseinrichtung einen elastisch verformbaren Zwischenabschnitt zur Verbindung der Verbindungsabschnitte aufweist. Auf diese Weise ist gleichzeitig eine Verbindung der Mitnehmerelementabschnitte und eine Bewegbarkeit der Mitnehmerelementabschnitte relativ zueinander gewährleistet.

Besonders vorteilhaft ist, wenn die Verbindungseinrichtung durch ein Elastomerteil gebildet ist. Im einfachsten Fall kann es sich um einen elastischen Materialstrang handeln, dessen freien Enden jeweils in einander zugewandten Vertiefungen der sich gegenüberliegenden Mitnehmerelementabschnitte fixiert sind. Das Elastomerteil gleicht eine Bewegung in der Ebene der Kontaktflächen, also relativ zu der Führungsachse geneigt, aus.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine Draufsicht einer ersten Ausführungsform einer Mitnehmereinrichtung;
- Fig. 2: eine perspektivische Ansicht der Mitnehmereinrichtung gemäß Fig. 1 längs einer in Fig. 1 mit II - II bezeichneten Schnittebene;
- Fig. 3: eine Draufsicht einer zweiten Ausführungsform einer Mitnehmereinrichtung;
- Fig. 4: eine perspektivische Ansicht der Mitnehmereinrichtung gemäß Fig. 3 längs einer in Fig. 3 mit IV - IV bezeichneten Schnittebene; und
- Fig. 5: einen in Figuren 2 und 4 mit V bezeichneten Ausschnitt in vergrößerter Darstellung.

In der Zeichnung sind Mitnehmereinrichtungen insgesamt jeweils mit dem Bezugszeichen 10 bezeichnet. Die Mitnehmereinrichtungen 10 weisen ein Mitnehmergehäuse 12 zur Verbindung mit einer (nicht dargestellten) Antriebseinrichtung auf. Die Antriebseinrichtung ist beispielsweise durch einen Spindelstock einer Drehmaschine gebildet und dient zum Drehantrieb der Mitnehmereinrichtung um eine Drehachse 14.

Das Mitnehmergehäuse 12 weist in an sich bekannter Weise einen zentralen Durchbruch (in der Zeichnung verdeckt) auf, der dazu dient, Spitzen 34 der Mitnehmereinrichtung mittels einer Druckbeaufschlagungseinrichtung 16 mit einer Druckkraft zu beaufschlagen.

Die Mitnehmereinrichtung 10 weist ferner ringscheibenförmige, konzentrisch zu der Drehachse angeordnete Abstützelemente 18 auf, mit Abstützflächen 20, die zur Abstützung rückwärtiger Enden 22 von Mitnehmerelementen 24 dienen.

Die Mitnehmerelemente 24 sind entlang eines Umfangs um die Drehachse 14 verteilt angeordnet; es sind beispielsweise drei, vier, fünf, sechs oder auch mehr Mitnehmerelemente 24 vorgesehen.

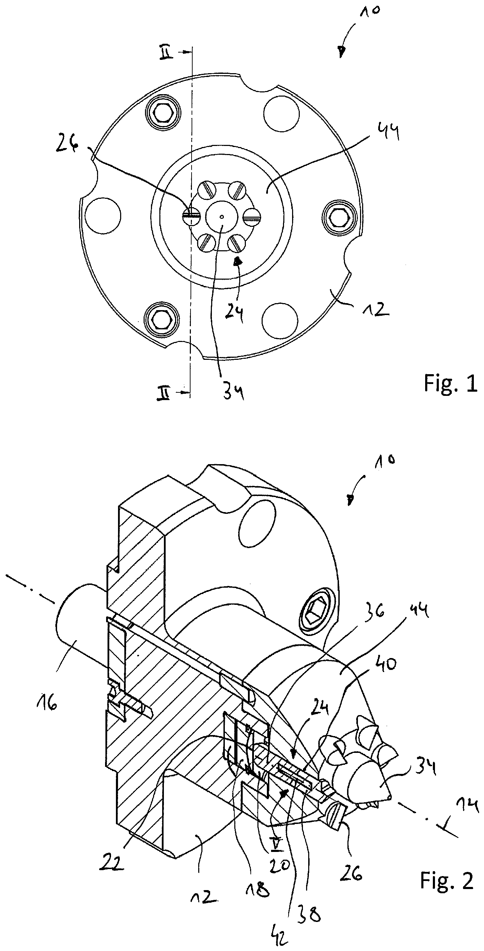

Die Mitnehmerelemente 24 weisen ein freies Ende 26 auf. Die freien Enden 26 können beispielsweise zahnartig ausgebildet sein (vergleiche Figur 2), damit die freien Enden 26 mit einem zu bearbeitenden Werkstück in Eingriff gebracht werden können und sich dort verkrallen können.

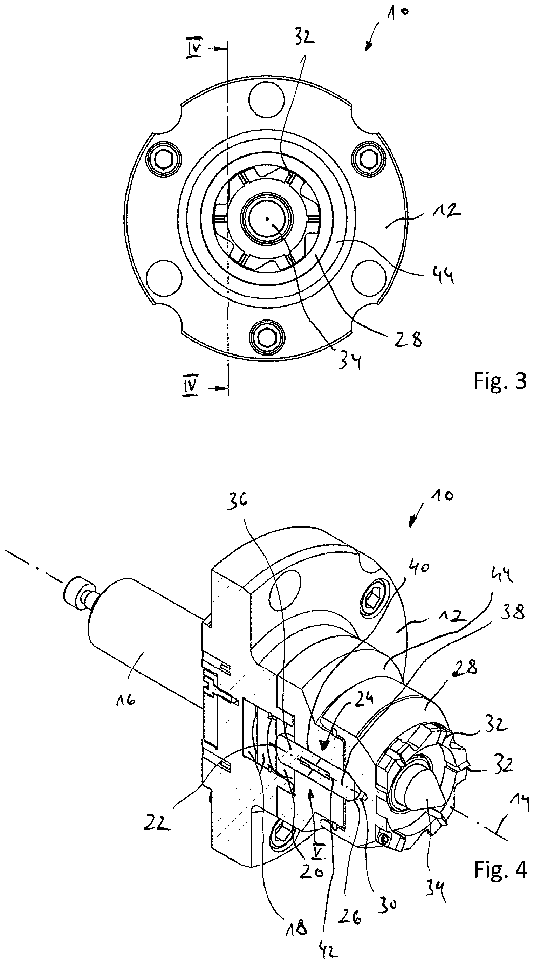

Die freien Enden 26 können aber auch mit einem Zwischenelement 28 (vergleiche Figur 4) zusammenwirken, das zu der Form der freien Enden 26 der Mitnehmerelemente 24 korrespondierende Gegenflächen 30 aufweist. Beispielsweise ist das freie Ende 26 kugelabschnittsförmig, während die Gegenfläche 30 kegeltrichterförmig ausgebildet ist. Für den Fall der Verwendung eines Zwischenelements 28 trägt dieses auf der dem Werkstück zugewandten Seite zahnartige Verkrallungselemente 32.

Die Mitnehmerelemente 24 bilden eine in etwa zylindrische Baugruppe, welche einen vorderen, ersten Mitnehmerelementabschnitt 36 aufweist, sowie einen rückwärtigen, zweiten Mitnehmerelementabschnitt 38. Diese Baugruppe ist in einer hohlzylindrischen Mitnehmerelementführung 40 entlang einer Führungsachse 42 geführt.

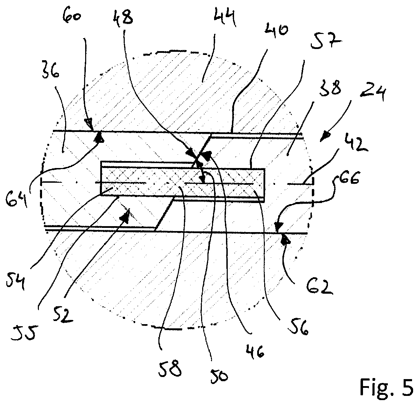

Die Führungsachse 42 eines Mitnehmers 24 verläuft vorzugsweise parallel zu der Drehachse 14. Die Mitnehmerelementführung 40 ist durch eine Bohrung in einem ringförmigen Teil 44 ausgebildet, welcher Bestandteil des Gehäuses 12 ist oder drehfest mit diesem verbunden ist. Die Mitnehmerelementabschnitte 36 und 38 weisen einander zugewandte Kontaktflächen 46, 48 auf (vergleiche Figur 5). Diese Kontaktflächen sind glattflächig und erstrecken sich in geraden Ebenen. Diese Flächen sind bezogen auf die Führungsachse 42 um einen Winkel 50 von beispielsweise 45° geneigt.

Die Mitnehmerelementabschnitte 36 und 38 sind mittels einer Verbindungseinrichtung 52 miteinander verbunden. Die Verbindungseinrichtung 52 ist insbesondere als Elastomerteil ausgebildet, das mit einem ersten Verbindungsabschnitt 54 in einer hierzu korrespondierenden Vertiefung 55 des ersten Mitnehmerelements 36 verbunden ist und mit einem zweiten Verbindungsabschnitt 56 innerhalb einer mit diesem korrespondierenden Vertiefung 57 des zweiten Mitnehmerelementabschnitts 38. Der Übergangsbereich zwischen den Verbindungsabschnitten 54 und 56 bildet einen Zwischenabschnitt 58, der eine Relativbewegung der Mitnehmerelementabschnitte 36 und 38 erlaubt.

Bei einer solchen Relativbewegung und Druckbeaufschlagung der Mitnehmerelemente 24 werden diese von dem freien Ende 26 her entweder direkt von einem zu bearbeitenden Werkstück oder mittels des Zwischenelements 28 mit Druckkraft beaufschlagt. Hierdurch gleiten die Kontaktflächen 46 und 48 der Mitnehmerelementabschnitte 36 und 38 aufeinander ab, sodass einander abgewandte Umfangsflächen 60, 62 unterschiedlicher Mitnehmerelementabschnitte 36, 38 gegen einander gegenüberliegende Wandabschnitte 64, 66 der Mitnehmerelementführung 40 gedrückt werden. Hierbei stützen sich die rückwärtigen Enden der Mitnehmerelemente 24 an den Abstützelementen 18 ab. Auf diese Weise sind die Mitnehmerelemente 24 spielfrei in der Mitnehmerelementführung 40 gehalten.

Bei den in den Ausführungsbeispielen dargestellten Mitnehmereinrichtungen 10 sind die Spitzen 34 federbeaufschlagt, sodass sie bei Kontakt mit einem zu einer zentralen Werkstückachse konzentrischen Spitzenaufnahmebereich eines Werkstücks zurückweichen können, bis die freien Mitnehmerenden 26 oder aber die Verkrallungselemente 32 des Zwischenelements 28 in Eingriff mit dem Werkstück gelangen.

Alternativ hierzu ist es möglich, Mitnehmereinrichtungen zu verwenden, bei denen die Spitzen 34 entlang der Drehachse 14 gesehen fixiert, also nicht nachgiebig, sind. Bei solchen Mitnehmereinrichtungen ist eine separate Beaufschlagungseinrichtung vorgesehen, die von der Rückseite der Mitnehmereinrichtung her die zweiten Mitnehmerelementabschnitte 38 in Richtung auf das Werkstück drückt, wobei diese Bewegung dann über die Kontaktflächen 48 und 46 auf die ersten Mitnehmerelementabschnitte 36 übertragen wird, bis die freien Mitnehmerenden 26 (oder die Verkrallungselemente 32 eines von den Mitnehmerenden 26 beaufschlagten Zwischenelements 28) in Kontakt mit dem Werkstück gelangen. Eine solche Beaufschlagungseinrichtung kann beispielsweise in an sich bekannter Weise einen hydraulischen, elektrischen oder pneumatischen Aktor aufweisen, dessen Andrückkraft über Übertragungselemente auf das rückwärtige Ende der Mitnehmerelemente 24 bzw. der zweiten Mitnehmerelementabschnitte 38 übertragen wird. Solche Übertragungselemente können zu den oben genannten Abstützelementen 18 identisch oder ähnlich sein.

## Patentansprüche

1. Mitnehmereinrichtung (10) zur Drehmitnahme und Fixierung eines zwischen zwei Spitzen (34) aufgenommenen Werkstücks, umfassend ein Mitnehmergehäuse (12), welches zum Antrieb um eine Drehachse (14) mit einer Antriebseinrichtung verbindbar ist, ferner umfassend eine Mehrzahl von Mitnehmerelementen (24), welche jeweils in einer Mitnehmerelementführung (40) verschiebbar gelagert und mit einem freien Mitnehmerende (26) mit einer Stirnseite eines Werkstücks oder mit einem in die Stirnseite eingreifenden Zwischenelement (28) in Eingriff bringbar sind, **dadurch gekennzeichnet, dass** die Mitnehmerelemente (24) zwei voneinander separate Mitnehmerelementabschnitte (36, 38) aufweisen, welche entlang einer Führungsachse (42) innerhalb der Mitnehmerelementführung (40) geführt sind und welche einander zugewandte Kontaktflächen (46, 48) aufweisen, die relativ zu der Führungsachse (42) geneigt sind.

2. Mitnehmereinrichtung (10) nach Anspruch 1, **dadurch gekennzeichnet, dass** die Kontaktflächen (46, 48) glattflächig sind.

3. Mitnehmereinrichtung (10) nach Anspruch 1 oder 2, **dadurch gekennzeichnet, dass** sich die Kontaktflächen (46, 48) in geraden Ebenen erstrecken.

4. Mitnehmereinrichtung (10) nach einem der voranstehenden Ansprüche, **dadurch gekennzeichnet, dass** die Kontaktflächen (46, 48) bezogen auf die Führungsachse (42) einen Neigungswinkel (50) von 10° bis 80° aufweisen, vorzugsweise von 20° bis 70°, insbesondere von 30° bis 60°.

5. Mitnehmereinrichtung (10) nach einem der voranstehenden Ansprüche, **dadurch gekennzeichnet, dass** die Mitnehmerelementabschnitte (36, 38) mit Spiel behaftet in der Mitnehmerelementführung (40) geführt sind, vorzugsweise mit einem Radialspiel von mindestens 5 pm, vorzugsweise von mindestens 10 pm, insbesondere von mindestens 20 pm, 40 µm oder 60 µm.

6. Mitnehmereinrichtung (10) nach einem der voranstehenden Ansprüche, **dadurch gekennzeichnet, dass** die Mitnehmerelementabschnitte (36, 38) mittels einer Verbindungseinrichtung (52) miteinander verbunden sind.

7. Mitnehmereinrichtung (10) nach Anspruch 6, **dadurch gekennzeichnet, dass** die Verbindungseinrichtung (52) einen ersten Verbindungsabschnitt (54) zur festen Verbindung mit einem ersten Mitnehmerelementabschnitt (36) aufweist, dass die Verbindungseinrichtung einen zweiten Verbindungsabschnitt (56) zur festen Verbindung mit einem zweiten Mitnehmerelementabschnitt (38) aufweist und dass die Verbindungseinrichtung einen elastisch verformbaren Zwischenabschnitt (58) zur Verbindung der Verbindungsabschnitte (54, 56) aufweist.

8. Mitnehmereinrichtung (10) nach Anspruch 6 oder 7, **dadurch gekennzeichnet, dass** die Verbindungseinrichtung (52) durch ein Elastomerteil gebildet ist.

## Claims

1. Driver device (10) for driving and fastening a work piece inserted between two points (34), including a driver case (12) which can be connected with a propulsion unit around an axis of rotation (14) for propulsion, further including multiple drive elements (24), each of which is adjustably located in a drive element duct (40) and which are meshable with an open driver end (26) with a front side of a work piece or with an interim element (28) that inserts into the front side, distinguished by the fact that the driver elements (24) exhibit two separate driver element sections (36, 38) that are led along the leading axle (42) within the driver element duct (40) and which exhibit two contact surfaces (46, 48) facing each other that are slanted relative to the leading axle (42) .

2. Driver device (10) as per claim 1, distinguished by the fact that the contact surfaces (46, 48) are smooth.

3. Driver device (10) as per claim 1 or 2,
distinguished by the fact that the contact surfaces (46, 48) extend into flat surfaces.

4. Driver device (10) as per one of the preceding claims, distinguished by the fact that the contact surfaces (46, 48) in relation to the leading axle (42) form an angle of inclination (50) of 10° to 80°, ideally from 20° to 70°,in particular from 30° to 60°.

5. Driver device (10) as per one of the preceding claims, distinguished by the fact that the driver element sections (36, 38) are cleared for insertion in the driver element duct (40), preferably with a radial clearance of at least 5 pm, ideally of at least 10 pm, in particular of at least 20 pm, 40 pm or 60 pm.

6. Driver device (10) as per one of the preceding claims, distinguished by the fact that the driver element sections (36, 38) are connected to one another by a connection element (52).

7. Driver device (10) as per claim 6, distinguished by the fact that the connection element (52) exhibits an initial connection section (54) to the firm connection with an initial driver element section (36), that the connection element exhibits a second connection section (56) to the firm connection with a second driver element section (38), and that the connection element exhibits an elastic, malleable interim section (58) for connecting the connection sections (54, 56).

8. Driver device (10) as per claim 6 or 7,
distinguished by the fact that the connection element (52) is formed by an elastomer component.

## Revendications

1. Dispositif de retenue (10) pour retenir en rotation et fixer une pièce à usiner reçue entre deux pointes (34), comprenant un boîtier de retenue (12), qui peut être relié à un dispositif d'entraînement pour un entraînement autour d'un axe de rotation (14), comprenant en outre plusieurs éléments de retenue (24), qui sont chacun montés de manière déplaçable dans un guide d'élément de retenue (40) et peuvent être mis en prise via une extrémité de retenue libre (26) avec une face frontale d'une pièce à usiner ou avec un élément intermédiaire (28) venant en prise dans la face frontale, **caractérisé en ce que** les éléments de retenue (24) comportent deux sections d'élément de retenue mutuellement séparées (36, 38) qui sont guidées le long d'un axe de guidage (42) à l'intérieur du guide d'élément de retenue (40) et qui comportent des surfaces de contact (46, 48) orientées l'une vers l'autre, qui sont inclinées par rapport à l'axe de guidage (42).

2. Dispositif de retenue (10) selon la revendication 1, **caractérisé en ce que** les surfaces de contact (46, 48) sont lisses.

3. Dispositif de retenue (10) selon la revendication 1 ou 2, **caractérisé en ce que** les surfaces de contact (46, 48) s'étendent dans des plans rectilignes.

4. Dispositif de retenue (10) selon l'une des revendications précédentes, **caractérisé en ce que** les surfaces de contact (46, 48), par rapport à l'axe de guidage (42), présentent un angle d'inclinaison (50) de 10° à 80°, de préférence de 20° à 70°, en particulier de 30° à 60°.

5. Dispositif de retenue (10) selon l'une des revendications précédentes, **caractérisé en ce que** les sections d'élément de retenue (36, 38) sont guidées avec un jeu marginal dans le guide d'élément de retenue (40), de préférence avec un jeu radial d'au moins 5 µm, de préférence d'au moins 10 µm, en particulier d'au moins 20 µm, 40 µm ou 60 µm.

6. Dispositif de retenue (10) selon l'une des revendications précédentes, **caractérisé en ce que** les sections d'élément de retenue (36, 38) sont interconnectées au moyen d'un dispositif de connexion (52).

7. Dispositif de retenue (10) selon la revendication 6, **caractérisé en ce que** le dispositif de connexion (52) comporte une première section de connexion (54) pour une connexion fixe avec une première section d'élément de retenue (36), **en ce que** le dispositif de connexion comporte une seconde section de connexion (56) pour une connexion fixe avec une seconde section d'élément de retenue (38), et **en ce que** le dispositif de connexion comporte une section intermédiaire élastiquement déformable (58) pour connecter les sections de connexion (54, 56).

8. Dispositif de retenue (10) selon la revendication 6 ou 7, **caractérisé en ce que** le dispositif de connexion (52) est formé par une pièce en élastomère.
